# EUROPEAN PATENT SPECIFICATION

(11) **EP 4 311 416 B1**
(45) Date of publication and mention of the grant of the patent: **02.12.2026**
(21) Application number: 23176335.0
(22) Date of filing: 31.05.2023
(51) Int. Cl.: A01D 34/00

(54) **TRIMMERS AND AUTO ADVANCING TRIMMER LINES**
TRIMMER UND SELBSTVORSCHUB-TRIMMERFÄDEN
TONDEUSES ET LIGNES DE TONDEUSE À AVANCEMENT AUTOMATIQUE

(30) Priority: 07.06.2022 US 202263349613 P
(43) Date of publication of application: 31.01.2024
(73) Proprietor: Milwaukee Electric Tool Corporation, Brookfield, WI 53005-2550 (US)
(72) Inventor: Cholst, Beth, Brookfield, WI, 53005-2550 (US); Abbott, Jonathan, Brookfield, WI, 53005-2550 (US)
(74) Representative: Grünecker Patent- und Rechtsanwälte PartG mbB

(56) References cited:
- WO-A1-2018/077231
- US-A1- 2021 037 704

## Description

### FIELD

The present disclosure relates generally to trimmers, and more particularly to trimmers having automatically advancing trimmer lines.

### BACKGROUND

Power tools are generally used to perform manual operations while reducing the required amount of manual labor. For example, trimmers can be utilized for trimming grass and weeds. Trimmers generally utilize a trimmer line which is spun at high speeds to break the grass and weeds. However, the trimmer line is subject to damage over periods of use and may become broken or ineffective. Accordingly, operators must advance new trimmer line as the existing trimmer line becomes exhausted. Manual advancement systems, such as bump feeds, may be used to activate the release of additional trimmer line but require bumping the power tool against a surface (e.g., the ground) which may, in turn, cause damage to the power tool. Auto feed trimmers may automatically advance new trimmer line with every trigger activation of the trimmer, but this may result in unnecessarily advancing and wasting new trimmer line.
WO 2018/077231 A1 relates to a grass trimmer and a trimmer line release method. The grass trimmer comprises an extension rod; a machine housing, arranged at one end of the extension rod; a trimming head, connected to the machine housing and being provided with a line outlet; a motor, used for driving the trimming head to rotate about an axis; a trimming line extending from the line outlet, the extended length thereof being the trimming length; a line release mechanism, able to selectively release the trimming line to increase the trimming length; a detection module, the detection module detecting specific parameters reflecting the trimming length when the grass trimmer performs a cutting operation; and a controller, used for comparing said specific parameters to preset parameters and outputting the comparison results. On the basis of the comparison results, the line release mechanism is selectively started up to release the trimming line. During the operating process, the operator can automatically release the line without the need to interrupt the operation of the grass trimmer; manual operation is not required and the line release is reliable.
US 2021/037704 A1 discloses a trimmer head which is arranged to be driven around a rotational axis ax, via an interface, to rotate a trimmer line. The trimmer head comprises a housing, the interface, a trimmer line spool, and an automatic feed mechanism. The automatic feed mechanism is configured to release a trimmer line spooled around the trimmer line spool when the trimmer head is subjected to a change in rotational speed, via the interface, at a higher rate than a threshold rate of change in rotational speed. The trimmer head further comprises an actuator connected to the automatic feed mechanism such that a manual actuation of the actuator releases the trimmer line spooled around the trimmer line spool.

Accordingly, alternative systems and methods of automatically advancing trimmer line without damaging the power tool or wasting trimmer line would be welcome in the art.
This object is solved by the subject matter of the independent claims. Advantageous embodiments are defined by the subject matter of the dependent claims.

### BRIEF DESCRIPTION

Aspects and advantages of the invention in accordance with the present disclosure will be set forth in part in the following description, or may be obvious from the description, or may be learned through practice of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a view of a trimmer in accordance with one or more embodiments of the present disclosure;
FIG. 2 is an enlarged view of a trimmer head of the trimmer in accordance with one or more embodiments of the present disclosure;
FIG. 3 is an exploded view of the trimmer head of FIG. 2 in accordance with one or more embodiments of the present disclosure;
FIG. 4 is a view of trimmer head with a sensor in accordance with one or more embodiments of the present disclosure;
FIG. 5 is a view of another trimmer head with a sensor in accordance with one or more embodiments of the present disclosure;
FIG. 6 is view of a trimmer line spool with a spool sensor in accordance with one or more embodiments of the present disclosure;
FIG. 7 is a view of a trimmer with an auto advance mechanism in accordance with one or more embodiments of the present disclosure;
FIG. 8 is a view of another trimmer with an auto advance mechanism in accordance with one or more embodiments of the present disclosure;
FIG. 9 is a view of yet another trimmer with an auto advance mechanism in accordance with one or more embodiments of the present disclosure; and
FIG. 10 is an exemplary method for auto advancing a trimmer in accordance with one or more embodiments of the present disclosure;

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, trimmers described in accordance with one or more embodiments herein include sensors and auto advance mechanisms that cooperate to selectively and automatically advance trimmer line without requiring manual bumping. The sensors can directly or indirectly determine the length of the trimmer line during operation of the trimmer. The length can then continuously or iteratively be compared to a predetermined threshold value such as a minimum desired length of trimmer line. When the length of trimmer line falls below the predetermined threshold value, the auto advance mechanism can automatically advance the trimmer line, such as in discrete intervals or continuously until the new length is sufficient. The trimmers shown and described herein can thereby allow for the automatic advancement of trimmer line without manual input and without wasting excessive trimmer line.

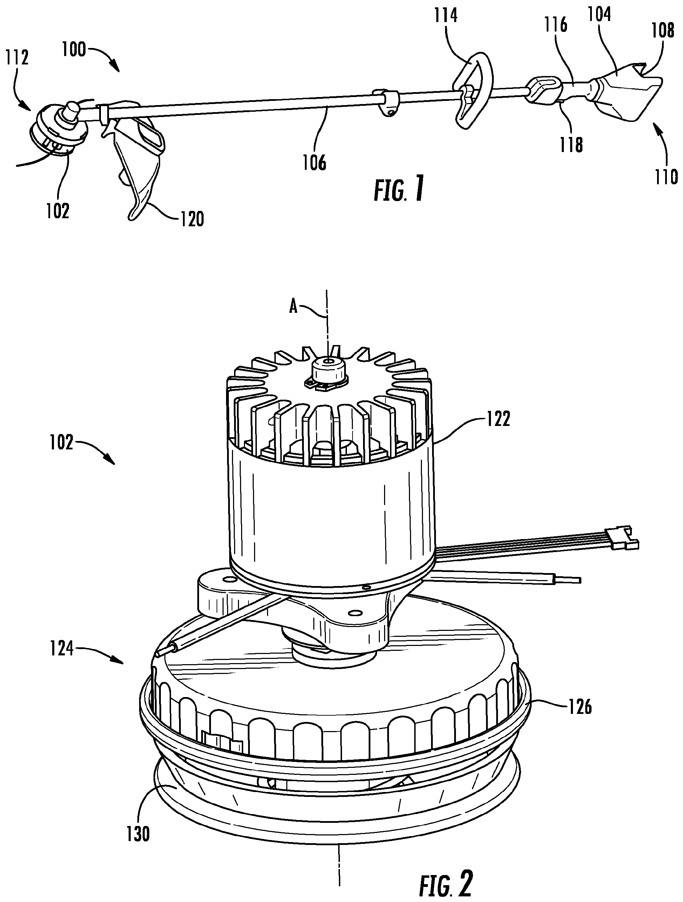

Referring now to the drawings, FIG. 1 illustrates a trimmer 100 including a trimmer head 102, a housing 104, and a connecting member 106 extending between the trimmer head 102 and the housing 104. The housing 104 may include a port 108 configured to be electrically connected with a power source, such as a battery (not illustrated) or wall outlet. The port 108 is illustrated as being disposed at a first end 110 of the trimmer 100 and the trimmer head 102 is disposed at a second end 112 of the trimmer 100. In other embodiments, either one or both of the port 108 or trimmer head 102 can be spaced apart from the first end 110 or second end 112, respectively. In certain instances, the trimmer 100 may be electrically powered, e.g., via the battery or through a wall outlet. In other instances, the trimmer 100 may be powered by a fuel, such as gasoline.

A handle 114 can be disposed along the connecting member 106, the housing 104, or another portion of the trimmer 100, to form a handle assembly. The handle 114 can allow the operator to support the weight of the trimmer 100 during operation. A grip 116 can be disposed along the connecting member 106 to permit a second point of contact for the operator. The grip 116 can include, for example, a portion of the connecting member 106 including a user interface 118. The user interface 118 can include a trigger that allows the operator to selectively control the trimmer 100. The user interface 118 can further include other controls which permit the operator to effect change to the trimmer 100. For instance, by way of non-limiting example, the user interface 118 may include any one or more of a cruise control feature allowing the operator to maintain the operating speed of the trimmer head 102, a turbo which allows the trimmer 100 to reach full operational speed, a power switch having at least ON and OFF functionality, a safety, or any other desirable user controls. As described in greater detail below, the user interface 118 can include a trimmer line advance interface configured to selectively feed trimmer line from the cartridge when actuated. In the illustrated embodiment, the grip 116 and user interface 118 are disposed between the handle 114 and the port 108. In other embodiments, the relatively arrangement of the grip 116, user interface 118, handle 114, and port 108 can be adjusted.

In certain embodiments, the trimmer 100 can further include a guard 120 configured to protect the operator from flying debris kicked up by the trimmer head 102. In certain instances, the guard 120 can be engaged with the connecting member 106 and be disposed adjacent to the trimmer head 102. Features of the guard 120 will be described in further detail below.

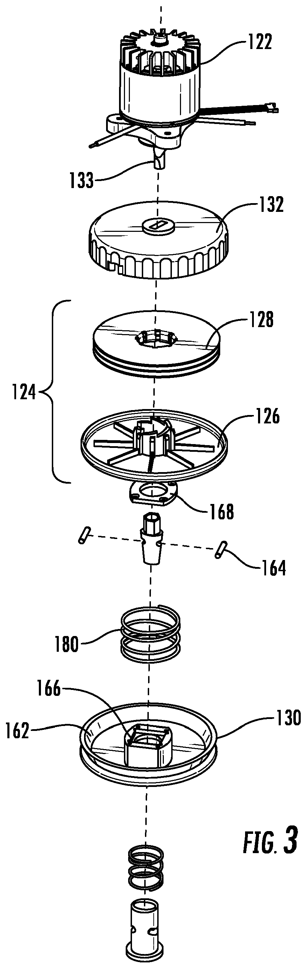

Referring to FIG. 2, the trimmer head 102 can generally include a power source, e.g., a motor 122, configured to drive a subassembly 124 including a flywheel 126 and a cartridge 128 (FIG. 3) containing trimmer line 129. The subassembly 124 can be maintained in operative connection with the motor 122 by an actuation member 130. The actuation member 130 can be selectively moved between an engaged configuration in which the subassembly 124 is coupled to the motor 122 and a disengaged configuration in which the subassembly is detachable from the motor 122. Engaging and disengaging the actuation member 130 can be performed by the operator. When engaged, the actuation member 130 can maintain the trimmer head 102 in a ready-to-use configuration. The actuation member 130 may also protect one or more components of the trimmer head 102 from being impacted or contaminated by debris which might induce unintended feeding of trimmer line from the trimmer head 102.

The motor 122 can define an axis of rotation A about which the subassembly 124 is rotatable. In an embodiment, the actuation member 130 may be moveable between the engaged and disengaged configurations by translating the actuation member 130, or a portion thereof (as described in greater detail below), in a direction generally along the axis of rotation A. For example, in an embodiment, the actuation member 130 can be moved to the engaged configuration by translating the actuation member 130, or a portion thereof, along the axis of rotation A in a direction towards the motor 122. The actuation member 130 can be moved to the disengaged configuration by translating the actuation member 130, or a portion thereof, along the axis of rotation A in a direction away from the motor 122. In another embodiment, these directions may be switched such that the actuation member 130 is moved to the engaged configuration by translating the actuation member 130, or a portion thereof, along the axis of rotation A in a direction away from the motor 122 and moved to the disengaged configuration by translating the actuation member 130, or a portion thereof along the axis of rotation A in a direction toward the motor 122.

FIG. 3 illustrates an exploded view of the trimmer head 102 as seen in accordance with an exemplary embodiment of the present disclosure. A housing 132 can be disposed between the motor 122 and the cartridge 128. In an embodiment, the housing 132 can be rotationally keyed with the motor 122 such that rotational input from the motor 122 causes the housing 132 to rotate. A shaft 133 of the motor 122 can extend through the housing 132 and pass through at least a portion of the subassembly 124. In certain instances, the shaft 133 can rotatably drive the housing 132.

In an embodiment, the housing 132 can be disposed between the subassembly 124 and the motor 122. In an embodiment, the cartridge 128 can be disposed between the flywheel 126 and the housing 132. In an embodiment, the flywheel 126 may extend radially beyond the housing 132 such that a portion of the flywheel 126 is exposed from the trimmer head 102. In an embodiment, the subassembly 124 can be disposed between the housing 132 and the actuation member 130. It should be understood that other spatial arrangements are contemplated herein and that the above-described relative positions of the elements are exemplary only.

In certain instances, the cartridge 128 can be a single-use cartridge. Single-use cartridges allow the operator to replace exhausted cartridges without having to wind trimmer line. That is, the operator can dispose of each cartridge 128 after exhausting the trimmer line associated with that cartridge and replace the exhausted cartridge with a new cartridge already having trimmer line wound thereon. In this regard, replacement of the trimmer line does not require the operator to wind new trimmer line. Instead, the operator can simply replace the exhausted cartridge and resume operation of the trimmer 100. In certain instances, the cartridge 128 can be made using recycled materials. In an embodiment, the cartridge 128 can be reusable. For example, the operator can manually wind trimmer line to the cartridge 128. In this regard, the operator is not left with an unusable cartridge 128 after the trimmer line is depleted.

Trimmer line 129 is generally expended during operational use of the trimmer 100. For example, when performing trimming operations, the trimmer line 129 can become worn or frayed. For instance, upon contacting hard surfaces like rocks, walls, and posts at high speeds, the trimmer line can break. To continue operations after fraying or breaking, additional trimmer line 129 must be dispensed (or fed) from the cartridge 128.

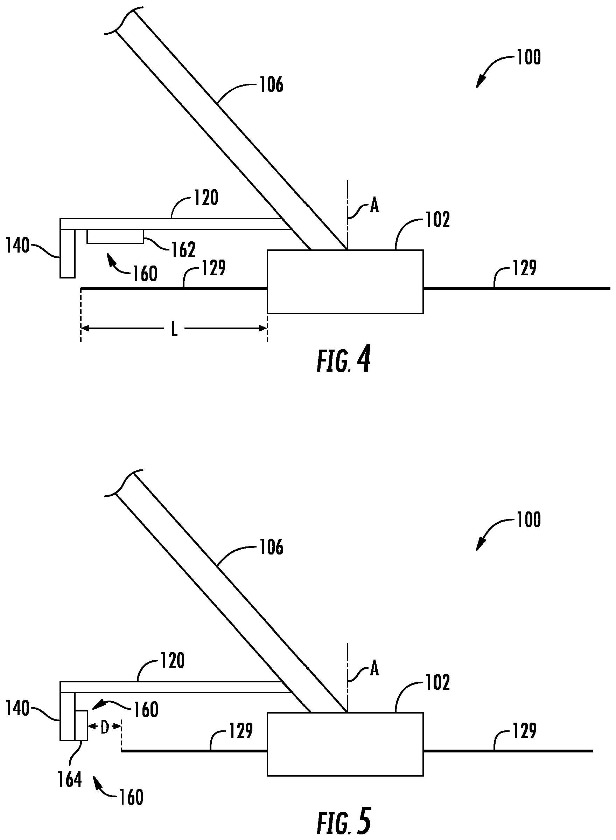

Referring now to FIGS. 4-6, the trimmer 100 can further comprise a sensor 160. The sensor 160 can comprise any suitable device, apparatus, or system configured to determine a length L of the trimmer line 129 extending from the trimmer head 102. In some embodiments, the length L of the trimmer line 129 may be measured directly. That is, the physical distance between the trimmer head 102 and the end of the trimmer line 129 that is outside of the trimmer head 102 may be measured through one or more means. In some embodiments, the length L may be measured indirectly wherein a separate measurement enables the deduction of the actual length L of the trimmer line 129. For example, the distance between the end point of the trimmer line 129 and a separate reference point may be measured, wherein said distance inherently correlates to the physical length of the trimmer line 129.

Multiple types of sensors 160 and operational parameters may be utilized to determine the length L of the trimmer line 129. For example, with particular reference to FIG. 4, in some embodiments the sensor 160 may comprise an optical sensor 162. The optical sensor 162 may comprise an optical device such as a camera or photodiode that can detect the trimmer line 129 at one or more locations near or about the trimmer head 102 or its auxiliary components. The optical sensor 162 may be capable of detecting the trimmer line 129 when the trimmer line 129 is being rotated about the axis of rotation A. Such embodiments may allow for determination of the length L of the trimmer line when it is at maximum extension due to centrifugal force. Alternatively, or additionally, the optical sensor 162 may be capable of detecting the trimmer line 129 when the trimmer line 129 is stationary. Such embodiments may allow for more accurate detection of the line due to reduced movement, vibration, and other environmental factors.

The optical sensor 162 can be disposed in a variety of locations about the trimmer 100, the trimmer head 102, or other auxiliary components. For example, in some embodiments, the optical sensor 162 may be disposed underneath the guard 120. Additionally, or alternatively, the optical sensor 162 may be disposed between the cutter 140 and the trimmer head 102. In such embodiments, the optical sensor may be disposed closer to the cutter 140 than the trimmer head 102.

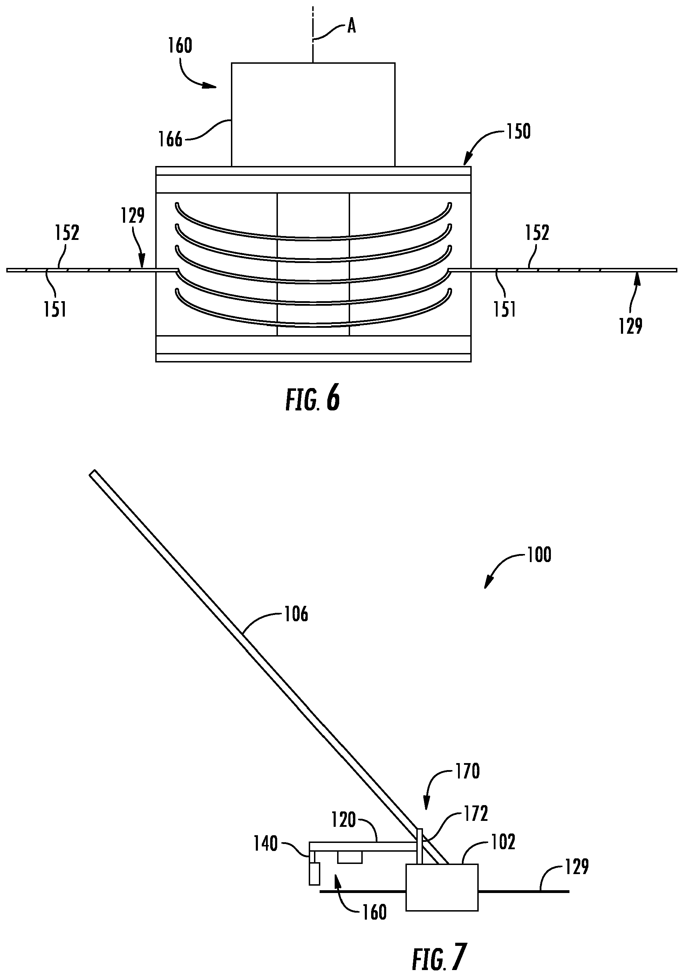

With particular reference to FIG. 5, in some embodiments the sensor 160 may comprise a Hall sensor 164. The Hall sensor 164 may comprise any device or devices capable of detecting the presence of a magnetic field using the Hall effect. In such embodiments, the trimmer line 129 or some other suitable derivation, can influence the strength of the magnetic field detected by the Hall sensor 164 based on its length L. In order to influence the strength of the magnetic field, the trimmer line 129 can comprise a ferrous or partially ferrous material. For example, as illustrated in FIG. 6, the trimmer line 129 may comprise a plurality of ferrous particles 151 embedded in, disposed on, coated with, coated on, or otherwise combined with a plastic line 152. The ferrous particles 151 may be substantially distributed throughout or about the trimmer line 129 to limit or avoid long stretches of trimmer line 129 that would not be detected by the Hall sensor 164. In other embodiments, the trimmer line 129 may entirely consist of, or nearly entirely consist of, a ferrous material itself.

The Hall sensor 164 may be used to determine a distance D separating the Hall sensor 164 and the trimmer line 129, such as the end of the trimmer line 129. Based on where the Hall sensor 164 is disposed with respect to the trimmer head 102, the distance D determined by the Hall sensor 164 may be used to deduce the length L of the trimmer line 129. For example, the distance D between the Hall sensor 164 and the trimmer line 129 may be deducted from a total distance between the Hall sensor 164 and the trimmer head 102 to determine the length L of the trimmer line.

The Hall sensor 164 can be disposed in a variety of locations about the trimmer 100, the trimmer head 102, or other auxiliary components. For example, in some embodiments, the Hall sensor 164 may be disposed underneath the guard 120. Additionally, or alternatively, the Hall sensor 164 may be disposed on the cutter 140. In these or other embodiments, the Hall sensor 164 may be disposed between the cutter 140 and the trimmer head 102.

With particular reference to FIG. 6, in some embodiments the sensor 160 may comprise a draw sensor 166. The draw sensor 166 can comprise any device capable of determining (e.g., measuring, tracking, or the like), the amount of trimmer line 129 drawn out from a trimmer line spool 150.

The draw sensor 166 may monitor the trimmer line 129 itself as its drawn from the trimmer line spool 150, may monitor the trimmer line spool 150 itself (e.g., as it rotates), or otherwise reference some movement indicative of drawing additional trimmer line 129. For example, the draw sensor 166 may detect every time the trimmer line spool 150 rotates. This detection may further be combined with additional variables to deduce an approximation of the length L of the trimmer line 129. For example, the measurement(s) from the draw sensor 166 may be combined with one or more operational parameters of the trimmer 100 such as run time, activation frequency, manual advancements of trimmer line 129. The combination of draw sensor 166 feedback and other operational parameters may then be correlated to derive a rough approximation of the length L of the trimmer line 129. This determination may be based on pre-programed algorithms, may be manually adjusted based on operator input(s), and/or may dynamically evolve such as through machine learning.

The draw sensor 166 can be disposed in a variety of locations about the trimmer 100, the trimmer head 102, or other auxiliary components. For example, in some embodiments, the draw sensor 166 may be disposed underneath the guard 120. Additionally, or alternatively, the draw sensor 166 may be disposed about the trimmer line spool 150, such as mounted directly on the trimmer line spool 150 or mounted adjacent to the trimmer line spool 150.

While reference and illustrations have been made to various sensors 160 and their locations, it should be appreciated that additional or alternative sensors 160 may also be realized within the scope of this disclosure. For example, the trimmer 100 may comprise a plurality of sensors 160 comprising the same type of sensors 160 or a variety of different sensors 160. Further, the sensors 160 may be pre-installed on the trimmer 100, trimmer head 102, or other auxiliary components, or may be manually added to said components by an operator.

Referring now to FIGS. 7-9, the trimmer 100 can further comprise an auto advance mechanism 170. The auto advance mechanism 170 can comprise any suitable device, apparatus, or system configured to advance the trimmer line 129 and extend its length L away from the trimmer head 102.

Multiple types of auto advance mechanisms 170 may be utilized. For example, with reference to FIG. 7, a stepper motor 172 may be utilized to advance the trimmer line 129. The stepper motor 172 may be configured to actuate an actuation member 130 of the trimmer head 102 to advance the trimmer line 129. The actuation mechanism by the stepper motor 172 of the actuation member 130 will depend on the type and structure of the actuation member 130 itself. For example, if the actuation member 130 comprises a compressible spring similar to a bump advancement mechanism, the stepper motor 172 may compress the spring to mimic a bump input and advance the trimmer line 129.

The stepper motor 172 can be disposed in a variety of locations about the trimmer 100, the trimmer head 102, or other auxiliary components. For example, the stepper motor 172 may be disposed on top of or adjacent to the trimmer head 102 such that it is operably connected to the actuation member 130.

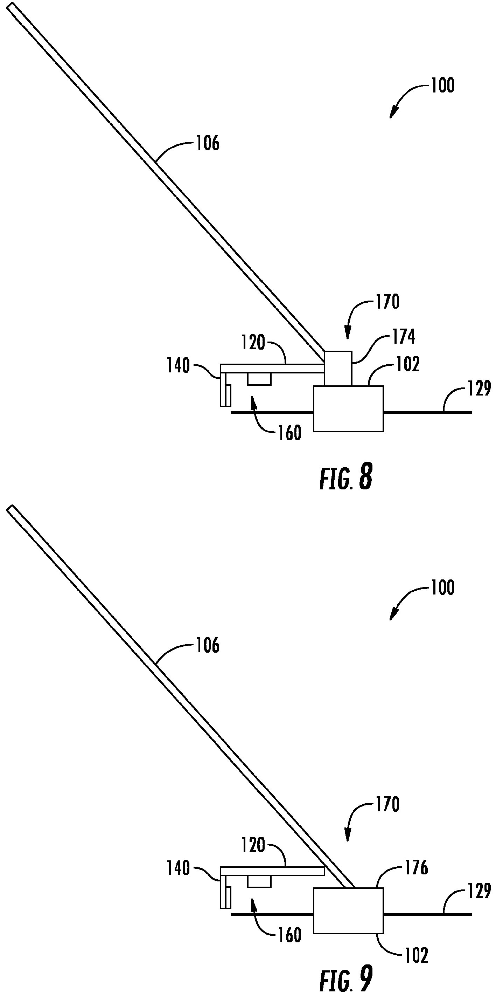

With reference to FIG. 8, a secondary motor 174 may be utilized to advance the trimmer line 129. The secondary motor 174 may be configured to rotate the trimmer line spool 150 (FIG. 6) to advance the trimmer line 129. The advancement or rotation mechanism by the secondary motor 174 of the trimmer line spool will depend on the type and structure of the trimmer line spool 150 and the secondary motor 174. For example, the secondary motor 174 may be in an operational connection with the trimmer line spool via one or more gears such that when the secondary motor 174 is activated, it causes rotation (either directly or indirectly) of the trimmer line spool 150 such that the trimmer line 129 is extended therefrom.

The stepper motor 172 can be disposed in a variety of locations about the trimmer 100, the trimmer head 102, or other auxiliary components. For example, the stepper motor 172 may be disposed adjacent to or integral with the trimmer line spool 150.

With reference to FIG. 9, a centrifugal clutch 176 may be utilized to advance the trimmer line 129. The centrifugal clutch 176 may be in an operable connection with the motor 122 of the trimmer 100 (or any other power source) to selectively advance the trimmer line 129 based on the rotational speed of the centrifugal clutch 176. That is, when the motor 122 or other power source causes the centrifugal clutch 176 to rotate past a threshold speed, the centrifugal clutch 176 can become engaged with the trimmer line spool 150 (FIG. 6) such that it rotates and advances the trimmer line 129. When the motor 122 or other power source reduces the speed of the centrifugal clutch 176 below the threshold speed, then the centrifugal clutch 176 becomes disengaged with the trimmer line spool 150 such that it no longer rotates. Such embodiments may allow for only requiring one motor 122 to both operate the trimmer when trimming grass or weeds as well as selectively advance the trimmer line 129.

The threshold force required for activation of the centrifugal clutch 176 can be greater than the standard operating speed of the trimmer 100 to prevent continuous advancement of the trimmer line 129 during routine operation. Instead, when the length L of the trimmer line 129 falls below a predetermined threshold value thereby triggering the auto advance mechanism 170, the trimmer 100 may momentarily speed up rotation to active the centrifugal clutch 176 so that it engages with the trimmer line spool 150 and advances the trimmer line 129 before slowing back down the trimmer 100 into the normal operational speed.

The centrifugal clutch 176 can be disposed in a variety of locations about the trimmer 100, the trimmer head 102, or other auxiliary components. For example, the centrifugal clutch 176 may be disposed adjacent to or integral with the trimmer line spool 150 or otherwise between the motor 122 and the trimmer line spool 150.

While reference and illustrations have been made to auto advance mechanisms 170 and their operations, it should be appreciated that additional or alternative auto advance mechanisms 170 may also be realized within the scope of this disclosure. For example, the trimmer 100 may comprise a plurality of auto advance mechanisms 170. Further, the auto advance mechanism 170 may be pre-installed on the trimmer 100, trimmer head 102, or other auxiliary components, or may be manually added to said components by an operator.

In operation, the trimmer 100 may thereby determine a length L of the trimmer line 129 using the sensor 160 and, based on feedback from the sensor 160, auto advance the trimmer line 129 using the auto advance mechanism 170. The determination may be based on pre-programed algorithms, may be manually adjusted based on operator input(s), and/or may dynamically evolve such as through machine learning.

The length L can then be compared to, for example, a predetermined threshold value. The predetermined threshold value may be factory preset, manually defined, adjustable from an initial default value. The comparison of the length L to the predetermined value may happen onboard the trimmer 100 itself such as via any suitable control system(s), programable logic controller(s), computer readable medium(s), or the like which are sufficient to perform comparisons and, based on said comparisons, selectively trigger the auto advance mechanism 170.

Moreover, in some embodiments, the auto advancement feature of the trimmer line 129 may be selectively engaged or disengaged by an operator, or even automatically based on, for example, the type of trimmer line 129 or trimmer line spool 150 installed on the trimmer 100.

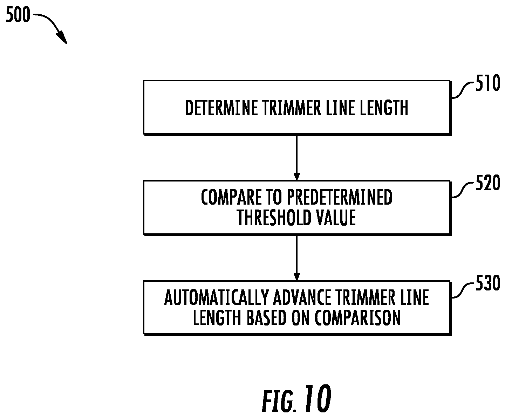

Referring now to FIG. 10, and with continued structural reference for illustrative purposes to the elements exemplary illustrated in FIGS. 1-9, an exemplary method 500 is illustrated for auto advancing the trimmer 100. The method 500 first comprises determining a length L of a trimmer line 129 extending from the trimmer head 102 in step 510. As discussed herein, the determination in step 510 may be accomplished using a variety of potential sensors 160 such as an optical sensor 162, a hall sensor 164, and/or a draw sensor 166. Moreover, the determination made in step 510 may be based on pre-programed algorithms, may be manually adjusted based on operator input(s), and/or may dynamically evolve such as through machine learning.

The method 500 further comprises comparing the length L to a predetermined threshold value in step 520. The predetermined threshold value may, for example, be factory preset, manually defined, adjustable from an initial default value. Moreover, the comparison of the length L to the predetermined value may happen onboard the trimmer 100 itself such as via any suitable control system, programable logic controller, computer readable medium, or the like which is sufficient to perform comparisons.

The method 500 further comprises automatically advancing the trimmer line 129 in step 530 if the length L falls below the predetermined threshold value. As discussed herein, the auto advancement of the trimmer line 129 in step 530 may be accomplished using a variety of potential auto advance mechanisms 170 such as a stepper motor 172, a secondary motor 174, and/or a centrifugal clutch 176.

The method 500 may run in a continuous loop, may run in a periodic iterative fashion, or may run selectively based on manual request.

## Claims

1. A trimmer (100) comprising:
a motor (122);
a trimmer head (102) disposed on a connecting member (106);
a user interface (118) disposed on the connecting member (106), wherein the user interface (118) is configured to operate the trimmer head (102);
a sensor (160) configured to determine a length of a trimmer line (129) extending from the trimmer head (102), the trimmer line (129) being arranged on a trimmer line spool (150); and,
an auto advance mechanism (170) configured to extend the trimmer line (129) extending from the trimmer head (102) based on feedback from the sensor (160), wherein the auto advance mechanism (170) comprises a centrifugal clutch (176) operably connected to the trimmer line spool (150), and wherein the centrifugal clutch (176) is in an operable connection with the motor (122) of the trimmer (100) to selectively advance the trimmer line (129) based on the rotational speed of the centrifugal clutch (176),
wherein, when the motor (122) causes the centrifugal clutch (176) to rotate past a threshold speed, the centrifugal clutch (176) becomes engaged with the trimmer line spool (150) such that it rotates and advances the trimmer line (129), and, when the motor (122) reduces the speed of the centrifugal clutch (176) below the threshold speed, then the centrifugal clutch (176) becomes disengaged with the trimmer line spool (150) such that it no longer rotates.

2. The trimmer of claim 1, wherein the sensor (160) comprises a draw sensor (166) configured to determine how much of the trimmer line (129) has been drawn from the trimmer line spool (150).

3. The trimmer of claim 1, wherein the sensor (160) comprises a Hall sensor (164).

4. The trimmer of claim 3, wherein the Hall sensor (164) is disposed on a guard (120) at least partially enclosing the trimmer head (102).

5. The trimmer of claim 3, wherein the Hall sensor (164) is disposed on a cutter (140).

6. The trimmer of claim 3, wherein the trimmer line (129) comprises ferrous particles embedded in the trimmer line (129).

7. The trimmer of claim 1, wherein the auto advance mechanism (170) automatically extends the trimmer line (129) when the length falls below a predetermined threshold value.

8. A method for auto advancing a trimmer line of a trimmer according to one of the preceding claims, the method comprising:
determining a length of the trimmer line extending from a trimmer head;
comparing the length to a predetermined threshold value; and,
automatically advancing the trimmer line if the length falls below the predetermined threshold value.

## Patentansprüche

1. Trimmer (100), der umfasst:
einen Motor (122);
einen Trimmerkopf (102), der an einem Verbindungselement (106) angeordnet ist;
eine Benutzerschnittstelle (118), die an dem Verbindungselement (106) angeordnet ist, wobei die Benutzerschnittstelle (118) zum Betätigen des Trimmerkopfes (102) ausgeführt ist;
einen Sensor (160), der zum Bestimmen einer Länge eines Trimmerfadens (129) von dem Trimmerkopf (102) aus ausgeführt ist, wobei der Trimmerfaden (129) auf einer Trimmerfadenspule (150) angeordnet ist; und
einen automatischen Ausfahrmechanismus (170), der zum Verlängern des sich von dem Trimmerkopf (102) aus erstreckenden Trimmerfadens (129) basierend auf einer Rückmeldung von dem Sensor (160) ausgeführt ist, wobei der automatische Ausfahrmechanismus (170) eine Fliehkraftkupplung (176) umfasst, die funktional mit der Trimmerfadenspule (150) verbunden ist, und wobei die Fliehkraftkupplung (176) in einer funktionalen Verbindung mit dem Motor (122) des Trimmers (100) steht, um den Trimmerfaden (129) basierend auf der Drehgeschwindigkeit der Fliehkraftkupplung (176) selektiv auszufahren,
wobei, wenn der Motor (122) bewirkt, dass sich die Fliehkraftkupplung (176) über eine Schwellenwertgeschwindigkeit hinaus dreht, die Fliehkraftkupplung (176) mit der Trimmerfadenspule (150) in Eingriff kommt, so dass sich diese dreht und den Trimmerfaden (129) ausfährt, und, wenn der Motor (122) die Geschwindigkeit der Fliehkraftkupplung (176) unter die Schwellenwertgeschwindigkeit reduziert, dann die Fliehkraftkupplung (176) außer Eingriff mit der Trimmerfadenspule (150) kommt, so dass sich diese nicht mehr dreht.

2. Trimmer nach Anspruch 1, wobei der Sensor (160) einen Zug-Sensor (166) umfasst, der so ausgeführt ist, dass er feststellt, wie weit der Trimmerfaden (129) von der Trimmerfadenspule (150) abgezogen worden ist.

3. Trimmer nach Anspruch 1, wobei der Sensor (160) einen Hallsensor (164) umfasst.

4. Trimmer nach Anspruch 3, wobei der Hallsensor (164) an einer Schutzvorrichtung (120) angeordnet ist, die den Trimmerkopf (102) wenigstens teilweise umschließt.

5. Trimmer nach Anspruch 3, wobei der Hallsensor (164) an einer Schneidvorrichtung (140) angeordnet ist.

6. Trimmer nach Anspruch 3, wobei der Trimmerfaden (129) in den Trimmerfaden (129) eingebettete Eisenteilchen umfasst.

7. Trimmer nach Anspruch 1, wobei der automatische Ausfahrmechanismus (170) den Trimmerfaden (129) automatisch ausfährt, wenn sich die Länge unter einen vorgegebenen Schwellenwert verringert.

8. Verfahren zum automatischen Ausfahren eines Trimmerfadens eines Trimmers nach einem der vorangehenden Ansprüche, wobei das Verfahren umfasst:
Bestimmen einer Länge des Trimmerfadens von einem Trimmerkopf aus;
Vergleichen der Länge mit einem vorgegebenen Schwellenwert; sowie
automatisches Ausfahren des Trimmerfadens, wenn sich die Länge unter den vorgegebenen Schwellenwert verringert.

## Revendications

1. Coupe-bordure (100), comprenant :
un moteur (122) ;
une tête de coupe-bordure (102) disposée sur un élément de connexion (106) ;
une interface utilisateur (118) disposée sur l'élément de connexion (106), dans lequel l'interface utilisateur (118) est configurée pour faire fonctionner la tête de coupe-bordure (102) ;
un capteur (160) configuré pour déterminer une longueur d'un fil de coupe-bordure (129) s'étendant à partir de la tête de coupe-bordure (102), le fil de coupe-bordure (129) étant agencée sur une bobine de fil de coupe-bordure (150) ; et,
un mécanisme d'avance automatique (170) configuré pour étendre le fil de coupe-bordure (129) s'étendant à partir de la tête de coupe-bordure (102) sur la base d'un retour provenant du capteur (160), dans laquelle le mécanisme d'avance automatique (170) comprend un embrayage centrifuge (176) connecté de manière opérationnelle à la bobine de fil de coupe-bordure (150), et dans laquelle l'embrayage centrifuge (176) est en connexion opérationnelle avec le moteur (122) du coupe-bordure (100) pour faire avancer sélectivement le fil de coupe-bordure (129) sur la base de la vitesse de rotation de l'embrayage centrifuge (176),
dans lequel, lorsque le moteur (122) amène l'embrayage centrifuge (176) à tourner au-delà d'une vitesse de seuil, l'embrayage centrifuge (176) vient en prise avec la bobine de fil de coupe-bordure (150) de telle sorte qu'il fait tourner et avancer le fil de coupe-bordure (129), et, lorsque le moteur (122) réduit la vitesse de l'embrayage centrifuge (176) en dessous de la vitesse de seuil, alors l'embrayage centrifuge (176) est libéré de la bobine de fil de coupe-bordure (150) de telle sorte qu'il ne tourne plus.

2. Coupe-bordure selon la revendication 1, dans lequel le capteur (160) comprend un capteur de déroulement (166) configuré pour déterminer la quantité du fil de coupe bordure (129) qui a été déroulée à partir de la bobine de fil de coupe-bordure (150).

3. Coupe-bordure selon la revendication 1, dans lequel le capteur (160) comprend un capteur à effet Hall (164).

4. Coupe-bordure selon la revendication 3, dans lequel le capteur à effet Hall (164) est disposé sur une protection (120) entourant au moins partiellement la tête de coupe-bordure (102).

5. Coupe-bordure selon la revendication 3, dans lequel le capteur à effet Hall (164) est disposé sur un dispositif de coupe (140).

6. Coupe-bordure selon la revendication 3, dans lequel le fil de coupe-bordure (129) comprend des particules ferreuses incorporées dans le fil de coupe-bordure (129).

7. Coupe-bordure selon la revendication 1, dans lequel le mécanisme d'avance automatique (170) étend automatiquement le fil de coupe-bordure (129) lorsque la longueur tombe en dessous d'une valeur de seuil prédéterminée.

8. Procédé d'avance automatique d'un fil de coupe-bordure d'un coupe bordure selon l'une quelconque des revendications précédentes, le procédé comprenant les étapes consistant à :
déterminer une longueur du fil de coupe-bordure s'étendant à partir d'une tête de coupe ;
comparer la longueur à une valeur de seuil prédéterminée ; et,
faire avancer automatiquement le fil de coupe-bordure si la longueur tombe en dessous de la valeur de seuil prédéterminée.
